# EUROPEAN PATENT SPECIFICATION

(11) **EP 3 536 140 B1**
(45) Date of publication and mention of the grant of the patent: **04.11.2020**
(21) Application number: 19161730.7
(22) Date of filing: 08.03.2019
(51) Int. Cl.: A01D 34/416

(54) **STRING TRIMMER ATTACHMENT FOR A TRIMMER HEAD**
FADENSCHNEIDERAUFSATZ FÜR EINEN TRIMMERKOPF
FIXATION DE TONDEUSE À FIL POUR UNE TÊTE DE TONDEUSE

(30) Priority: 09.03.2018 US 201862640807 P
(43) Date of publication of application: 11.09.2019
(73) Proprietor: TTI (Macao Commercial Offshore) Limited, Macao (MO)
(72) Inventor: Hoffman, Ronald J., Iva, SC 29655 (US); Holman, Christopher A., Clemson, SC 29631 (US)
(74) Representative: Grünecker Patent- und Rechtsanwälte PartG mbB

(56) References cited:
- EP-A1- 0 943 228
- WO-A1-98/18312
- WO-A1-99/04611
- DE-A1- 2 556 553
- US-A- 4 756 146
- US-A1- 2009 031 567
- US-B1- 6 666 009

## Description

### TECHNICAL FIELD

The present invention relates to trimmers and, more particularly, to a trimmer head and string trimmer attachment for a trimmer head.

### BACKGROUND

Generally, trimmers are used to cut grass and weeds and are often used to edge around trees, near fences and walls, and along landscape borders. Conventional string trimmers include an elongated shaft with a rotating element or head near the end of the shaft, and a spool or string head is attached to the head. Typically, the string head includes a monofilament line (i.e., trimmer line) rotated by the head for cutting and trimming along landscaped areas, fences, walls, etc.

EP 0,943,228 relates to a fixed-line trimmer head. According to the abstract of this document there is provided a fixed line trimmer head for string trimmer machines made to accommodate trimmer lines of a range of line sizes, from a relatively small diameter line to a maximum diameter line, typically from 0.080" to 0.160". To accomplish this, the trimmer head consists of a generally cylindrically-shaped hollow main housing member having a central axis through it. Exit openings for the line are formed on diametrically opposite sides of the main housing member in a plane which is perpendicular to the axis of the housing member. A first set of string entry holes is formed through the housing member in a plane which is offset from the plane of the exit openings; and these holes are located on opposite sides of a line which is perpendicular to the projection of a line passing through the exit openings. A second set of string entry holes is located on the opposite side of the hollow main housing member from the first entry holes; and these holes of the second set have a diameter which is less than the diameter of the first set of entry holes. The size of the exit openings is selected to accommodate the largest size line which may be passed through the entry holes.

US 6,666,009 relates to an adjustable spindle assembly for a grass trimmer. According to the abstract of this document there is provided an adjustable spindle assembly with a spindle housing, a grooved spindle shaft rotatably connected to the spindle housing, a pulley connected to one end of the grooved spindle shaft, a mow ball rotatably connected to a second end of the grooved spindle shaft, and a string carrier assembly connected in between the spindle housing and the mow ball. The string carrier assembly includes a pair of string guides and string holders for securing cutting string to the string carrier assembly without the use of tools. In addition, the string carrier assembly can be adjusted between the spindle housing and the mow ball without the use of tools.

WO 99/04611 relates to a fixed line trimmer head. According to the abstract of this document there is provided a line trimmer head assembly having a central hub and a body including an annular disc extending circumferentially radially outward from the central hub to removably receive the length of a uniform cross section line. The disc member is provided with a pair of openings on the disc periphery through which a fixed line length is threaded. The interior portion of the disc is provided with at least two retainer clips having a hook shaped member with an incline ramp surface for cooperating with the portion of the line extending between the two openings. The line is held in place by tension which causes the line to travel down the ramp surface.

US 2009/031567 relates to a fixed line trimmer head with ease of loading. According to the abstract of this document there is provided a head for string trimmer machines which uses fixed length segments of line including at least two line segments. The head includes a generally cylindrically shaped main housing member with at least two sets of first and second line entry holes on the housing member intermediate the first and second ends. At least two sets of first and second line exit openings also are found on the main housing member intermediate the first and second ends and spaced apart a greater distance than the distance between the first and second line entry holes. Arcuate guide channels are located between the respective entry holes and exit openings where the corresponding entry openings and exit openings of corresponding sets are located at different distances measured axially on the main housing member from the first end thereof.

### SUMMARY OF THE INVENTION

In an aspect of the invention, there is provided a string trimmer attachment that generally includes an attachment body defining a central opening positionable on a body of a trimmer head, the attachment body defining a driven member in the central opening, the driven member being engageable with a drive member of the trimmer head; and a line-holding structure supported on the attachment body operable to hold a trimming line extending radially-outwardly from the attachment body, the line-holding structure being circumferentially spaced from the driven member.

The first trimming line may be folded and may have a first end, a second end, and an intermediate portion, and the first line-holding structure may define a pair of circumferentially-spaced line insert openings and a pair of eyelets spaced circumferentially outside the line insert openings, the line insert openings may be operable to receive the intermediate portion, one of the pair of eyelets being operable to receive a portion of the first trimming line with the first end extending radially-outwardly, the other of the pair of eyelets being operable to receive a portion of the first trimming line with the second end extending radially-outwardly.

Each eyelet may include an outlet opening in communication with a radial slot, the radial slot being operable to receive the portion of the first trimming line with the first end extending radially-outwardly.

The radial slot may be defined by a radial wall, a circumferential indentation may be defined through the wall and be configured to guide a portion of the first trimming line between an associate line insert opening and eyelet.

The attachment body may define a plurality of openings proximate each eyelet.

The attachment body may define a second driven member circumferentially spaced from the first driven member and engageable with a second drive member of the trimmer head, the first line-holding structure may be circumferentially between the first driven member and the second driven member.

The string trimmer attachment may also include a second line-holding structure supported on the attachment body circumferentially spaced from the first line-holding structure, the second line-holding structure being operable to hold a second trimming line extending radially-outwardly from the attachment body, the first driven member being circumferentially between the first line-holding structure and the second line-holding structure.

In another aspect of the invention, there is provided a method of operating a string trimmer in accordance with claim 13. The trimmer includes a drive shaft and a trimmer head rotatably driven by the drive shaft. A string trimmer attachment includes an attachment body defining a central opening and a line-holding structure supported on the attachment body, the line-holding structure defining a first line insert opening and a second line insert opening circumferentially spaced from the first line insert opening, a first eyelet and a second eyelet spaced circumferentially outside the first line insert opening and the second line insert opening. A trimming line has a first end, a second end, and an intermediate portion. The method generally includes folding the trimming line; inserting the first end of the trimming line into the first line insert opening; guiding the first end of the trimming line circumferentially outwardly toward the first eyelet; inserting the first end of the trimming line radially outwardly through the first eyelet; inserting the second end of the trimming line into the second line insert opening; guiding the second end of the trimming line circumferentially outwardly toward the second eyelet; inserting the second end of the trimming line radially outwardly through the second eyelet; supporting the attachment body on the trimmer head; and rotatably driving the trimmer head and the attachment body.

Guiding the first end may include positioning the intermediate portion of the trimming line in a first indentation circumferentially between the first line insert opening and the first eyelet.

Guiding the second end may include positioning the intermediate portion of the trimming line in a second indentation circumferentially between the second line insert opening and the second eyelet.

Inserting the first end of the trimming line radially outwardly may include guiding the first end of the trimming line through a first slot.

Inserting the second end of the trimming line radially outwardly may include guiding the second end of the trimming line through a second slot.

Any optional feature discussed above in relation to one aspect may, where appropriate, be applied to another aspect.

Other independent aspects of the invention will become apparent by consideration of the detailed description, claims and accompanying drawings.

### BRIEF DESCRIPTION OF THE DRAWINGS

Fig. 1 is a perspective view of a trimmer head in one embodiment of the invention.
Fig. 2 is a bottom view of a body of the head of Fig. 1.
Fig. 3 is a bottom perspective view of the head of Fig. 1 with an attachment supported thereon.
Fig. 4 is a bottom view of the head and the attachment of Fig. 3.
Fig. 5 is a bottom view of the head and the attachment as shown in Fig. 4, with the lower housing removed.
Fig. 6 is a bottom view of the head and the attachment as shown in Fig. 4, with a retainer removed.
Fig. 7 is a cross-sectional side view of the head and the attachment taken generally along line 7-7 in Fig. 4.
Fig. 8 is a top perspective view of the attachment of Fig. 3.
Fig. 9 is a top perspective view of the attachment of Fig. 3, without trimmer lines.
Fig. 10 is a bottom perspective view of the attachment as shown in Fig. 9.
Fig. 11 is a top view of the attachment as shown in Fig. 9.
Fig. 12 is a bottom view of the attachment as shown in Fig. 9.
Fig. 13 is a side view of the attachment as shown in Fig. 9.
Fig. 14 is another side view of the attachment as shown in Fig. 9.
Fig. 15 is a top perspective view of a portion of the attachment as shown in Fig. 9, illustrating a trimming line loading process.

### DETAILED DESCRIPTION

Before any independent embodiments of the invention are explained in detail, it is to be understood that the invention is not limited in its application to the details of construction and the arrangement of components set forth in the following description or illustrated in the following drawings. The invention is capable of other independent embodiments and of being practiced or of being carried out in various ways. Also, it is to be understood that the phraseology and terminology used herein is for the purpose of description and should not be regarded as limiting.

Use of "including" and "comprising" and variations thereof as used herein is meant to encompass the items listed thereafter and equivalents thereof as well as additional items. Use of "consisting of' and variations thereof as used herein is meant to encompass only the items listed thereafter and equivalents thereof. Unless specified or limited otherwise, the terms "mounted," "connected," "supported," and "coupled" and variations thereof are used broadly and encompass both direct and indirect mountings, connections, supports, and couplings.

Relative terminology, such as, for example, "about", "approximately", "substantially", etc., used in connection with a quantity or condition would be understood by those of ordinary skill to be inclusive of the stated value or condition and has the meaning dictated by the context (for example, the term includes at least the degree of error associated with the measurement of, tolerances (e.g., manufacturing, assembly, use, etc.) associated with the particular value or condition, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10% or more) of an indicated value.

Also, the functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way but may also be configured in ways that are not listed.

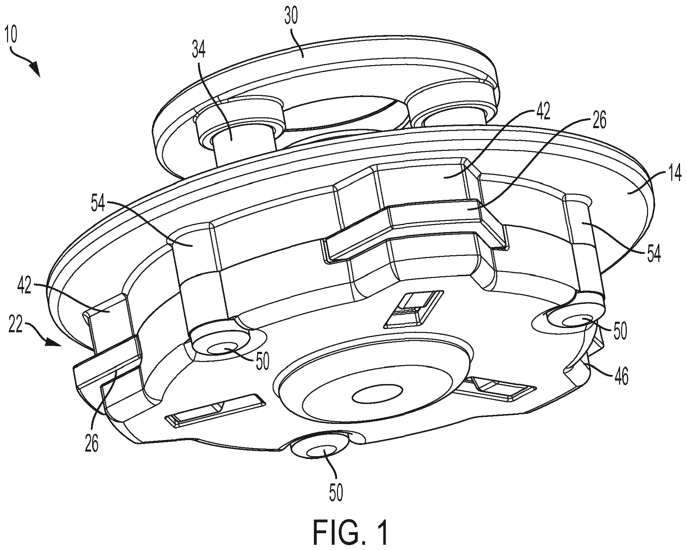

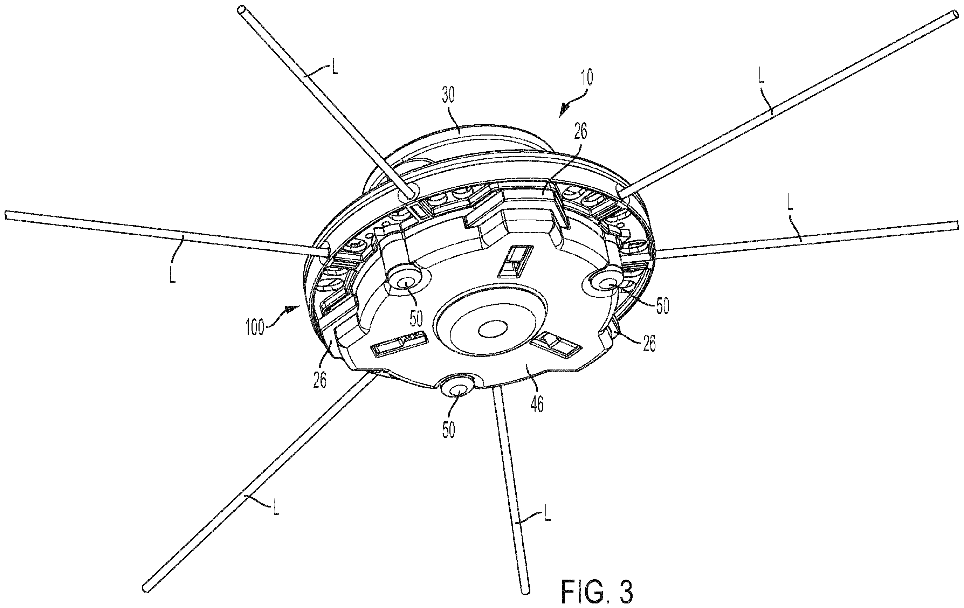

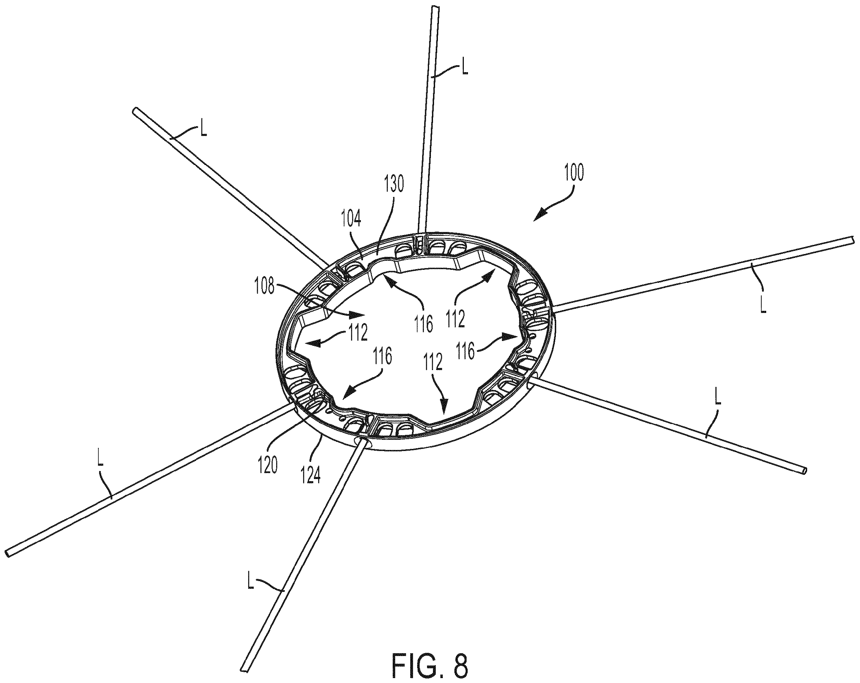

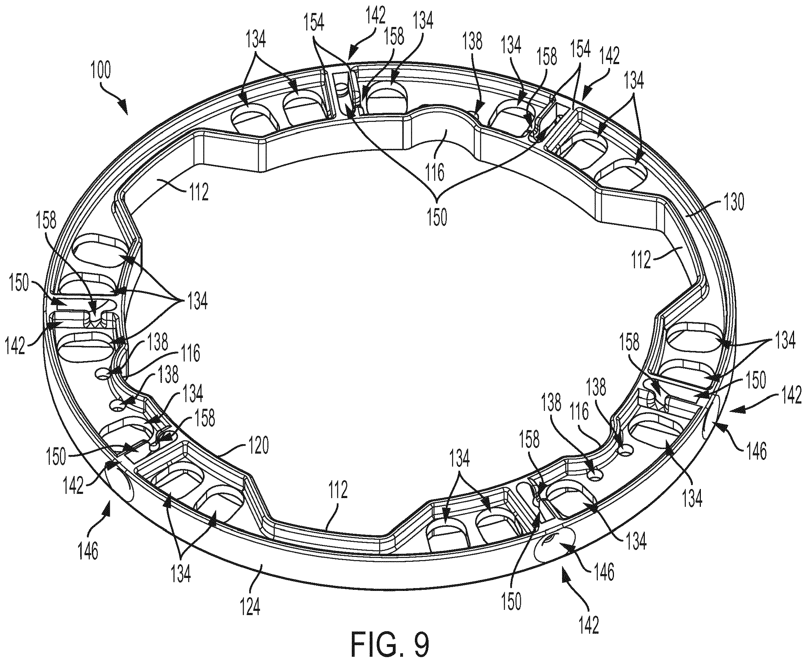

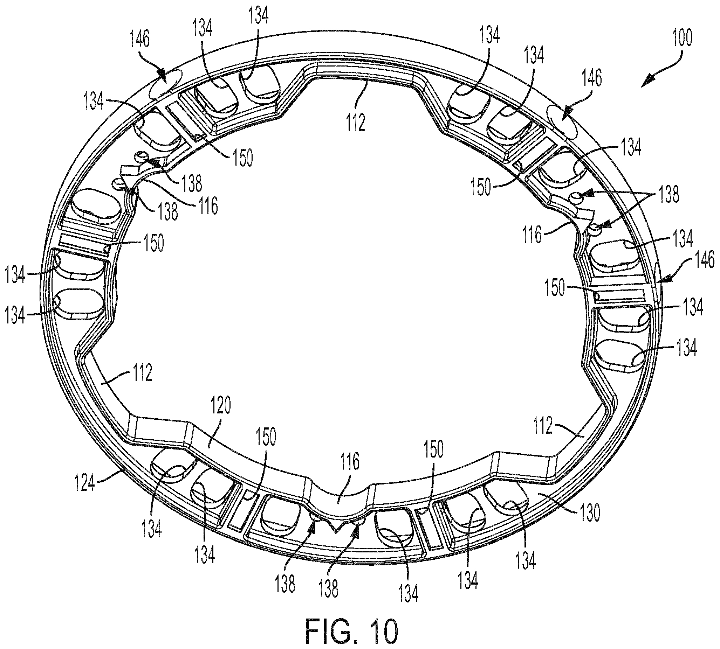

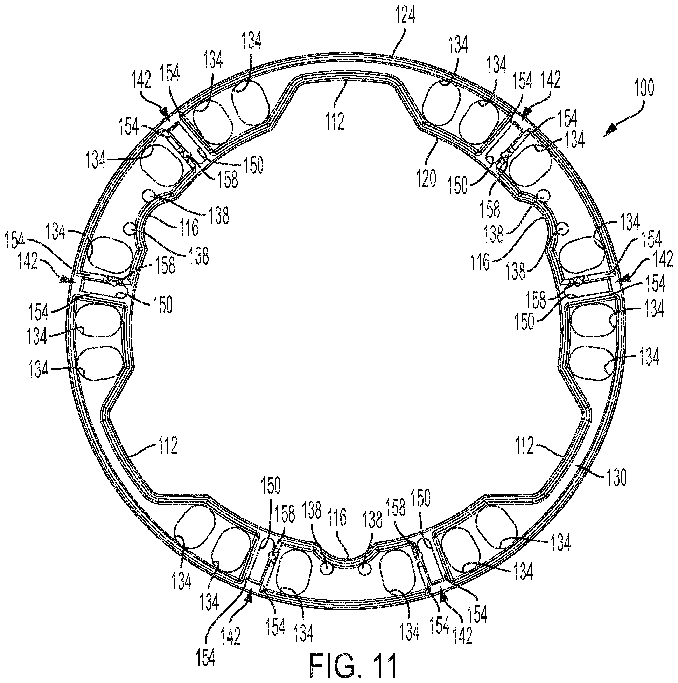

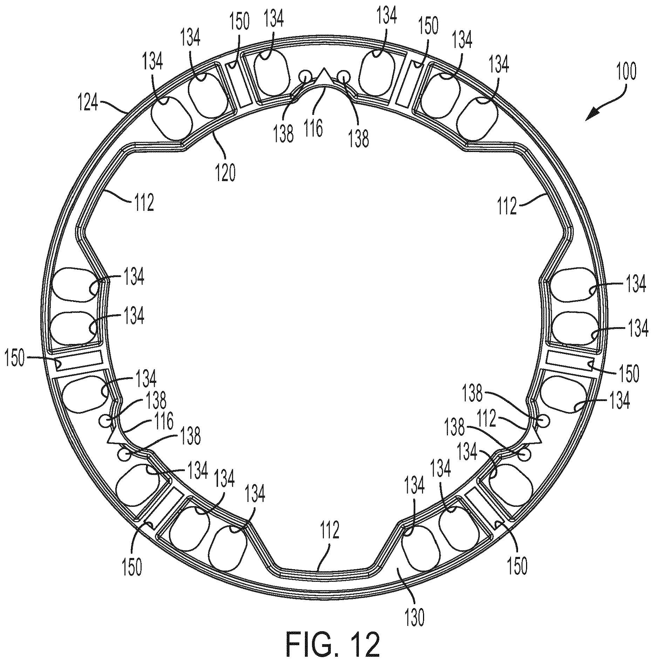

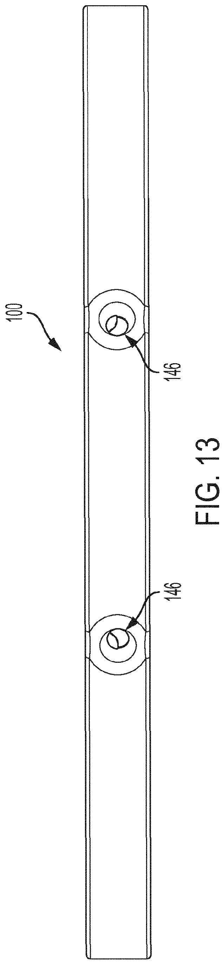

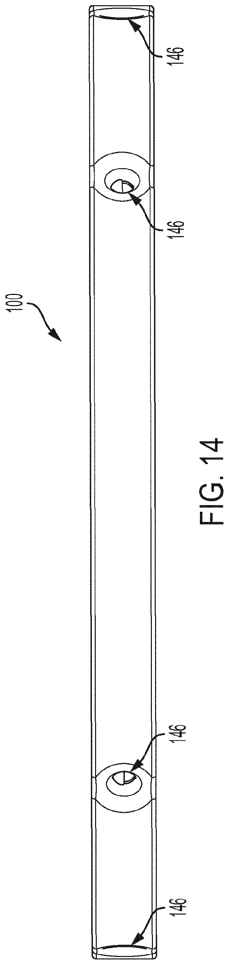

In general, the present invention relates to a string trimmer attachment 100 (see Figs. 8-15) for use with a trimmer head 10 (see Figs. 1-7). The string trimmer attachment 100 is selectively and removably coupled to the head 10, along with various other attachments (not shown) to conduct associated operations (e.g., cutting, edging, blowing, etc.) with the trimmer. The head 10 and each attachment 100 have a complementary interface for installation and removal/replacement of the attachment(s) 100.

The trimmer head 10 (see Figs. 1-7) is for use on an exemplary trimmer (not shown). Such a trimmer generally includes a shaft with a handle toward one end and a motor housing enclosing an electric motor with a motor-driven output or drive shaft, having an axis of rotation, for connection to a trimmer head on the other end. Various powered trimmers (e.g., battery-powered, gas-powered, etc.) may be used with the trimmer head 10. Exemplary trimmers are described and illustrated in U.S. Patent No. 8,464,431, issued on June 18, 2013, and in U.S. Patent No. 6,108,914, issued August 29, 2000.

As shown in Figs. 1-7, the head 10 generally includes a body 14 rotatable about an axis of rotation A and defining an axial opening 18 for connection to the trimmer drive shaft. The body 14 defines an annular channel 22 for receiving a selected attachment 100. The head 10 includes a retainer assembly cooperating with the body 14 to selectively retain the attachment 100.

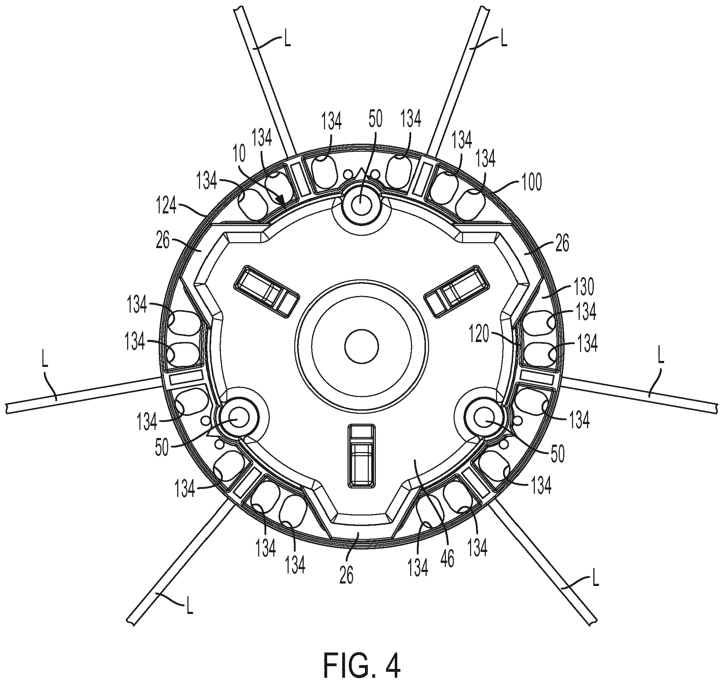

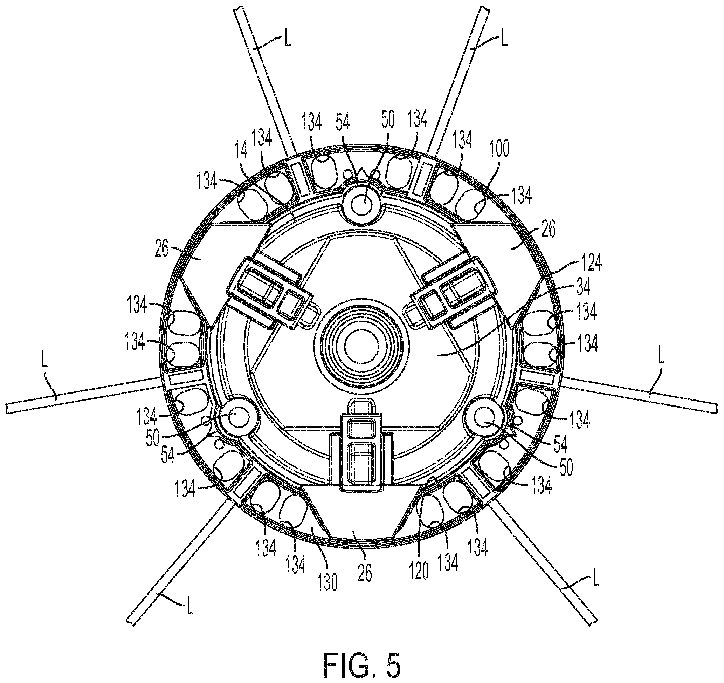

In the illustrated construction, the retainer assembly includes a number (e.g., three shown) of retainers 26 adjustable between a retaining position (Figs. 4-5 and 7), in which the retainers 26 cover or block the channel 22 to retain the selected attachment 100, and a release position (not shown), in which the retainers 26 uncover or unblock the channel 22 to allow the attachment 100 to move relative to the channel 22 (e.g., to be removed or installed). As shown in Fig. 5, the retainers 26 have substantially the same shape (e.g., trapezoidal) and are spaced substantially equidistant about the axis A (e.g., spaced about 120° apart).

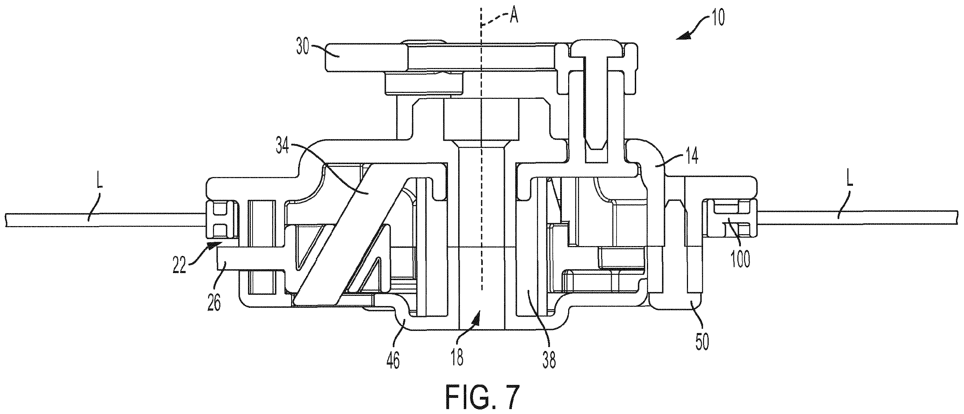

An actuating mechanism (see Figs. 1 and 7; e.g., including a strike plate 30 and a retainer carrier 34) is operable by a user (e.g., by engaging the strike plate 30, a lever (not shown), a guard (not shown), etc.) to adjust the position of the retainers 26. A biasing member biases the retainers 26 to the retaining position; for example, in the illustrated construction (see Fig. 7), a spring 38 biases the actuating mechanism to a position corresponding to the retaining position of the retainers 26.

In the illustrated construction, the retainers 26 are radially movable between the retaining and the release positions, and the actuating mechanism is axially movable to adjust the position of the retainers 26. In other constructions (not shown), the retainers 26 and/or the actuating mechanism may be movable in another manner (e.g., circumferentially, axially, radially, combinations thereof, etc.) between the positions.

In other constructions (not shown), fewer or more than three retainers 26 may be provided. Also, each or all of the retainers 26 may have a different shape than illustrated. In addition, the retainers 26 may have a different spacing (e.g., equidistant based on the number of retainers 26, non-equidistant, etc.).

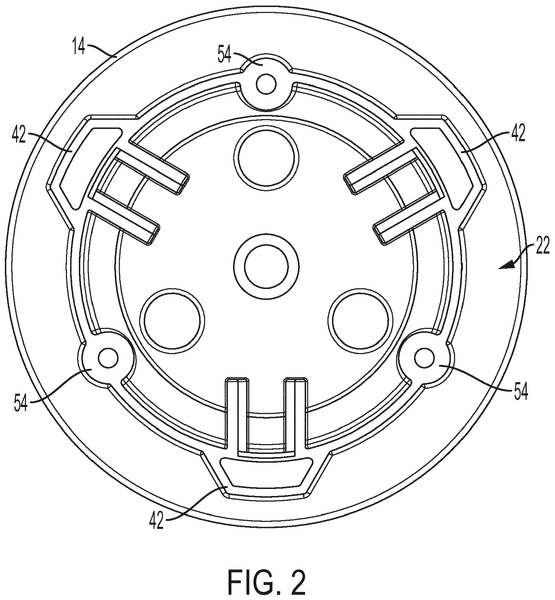

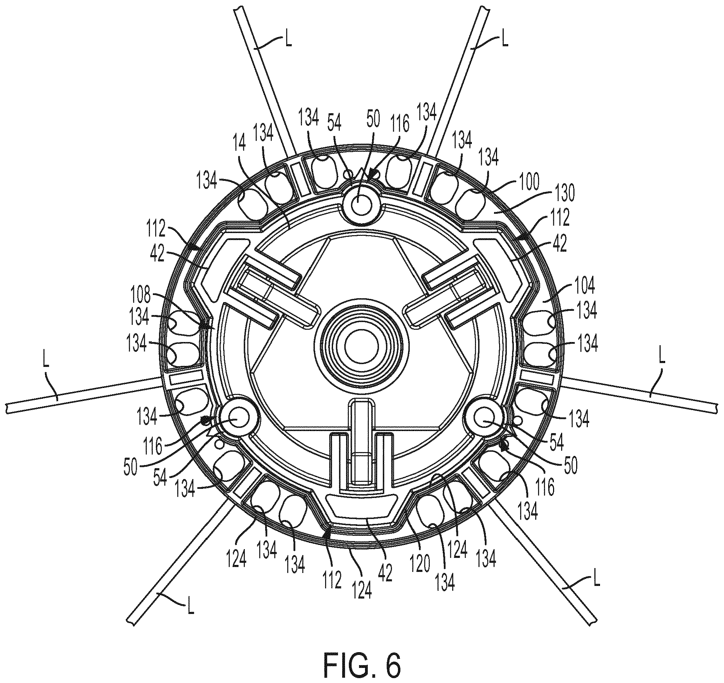

A drive arrangement is provided between the head 10 and the attachment 100 to transfer rotational movement of the head 10 to the attachment 100. In the illustrated construction, body 14 includes (see Figs. 2 and 6) a number (e.g., three shown) of radial projections 42 drivingly engageable with a supported attachment 100. The illustrated projections 42 have substantially the same shape (e.g., trapezoidal) and are spaced substantially equidistant about the axis A (e.g., spaced about 120° apart). In the illustrated construction, the retainers 26 are positioned circumferentially in alignment with and overlying an associated projection 42 of the body 14.

In other constructions (not shown), the body 14 may include fewer or more than three projections 42. Also, each or all of the projections 42 may have a different shape than illustrated. In addition, the projections 42 may have a different spacing (e.g., equidistant based on the number of projections 42 on the body 14, non-equidistant, etc.). Further, the projections 42 may extend in and/or engage the attachment 100 in a different manner (e.g., axially, circumferentially, combinations thereof, etc.).

The head 10 also includes (see Figs. 1 and 3-4) a lower housing 46 connectable to the body 14, for example, with fasteners 50, to house and/or retain components of the head 10 as a unit. The lower housing 46 covers the lower portion of the components of the head 10 to inhibit cut material, debris, etc. from interfering with operation of the components. The lower housing 46 is sized to allow installation and removal of the attachment 100. The body 14 includes (see Figs. 2 and 5-6) and an associated boss 54 for each fastener 50, and each illustrated boss 54 projects radially into the channel 22.

Figs. 8-13 illustrate an attachment 100, such as, in the illustrated example, a string trimmer attachment 100. In other constructions (not shown), the attachment 100 may include, for example, a cutter, an edger, a blower, etc. In the illustrated construction, the string trimmer attachment 100 is refillable with trimming lines L. In other constructions (not shown), the trimming lines may be fixed to (e.g., formed with) the string trimmer attachment 100.

The attachment 100 includes a body 104 defining a central opening 108 to engage the body 14 of the head 10 (e.g., in the channel 22). The attachment 100 defines a number (e.g., three shown) of notches 112 and a number (e.g., three shown) of recesses 116 around the perimeter of the opening 108. The notches 112 are complementary to and drivingly engageable with the projections 42 on the body 14 to cooperate to provide the drive arrangement. The illustrated notches 112 are shaped (e.g., trapezoidal) and positioned (e.g., equidistant; about 120° apart) to receive the projections 42. The recesses 116 are shaped and positioned to receive the bosses 54. In the illustrated construction, the attachment 100 is supportable on the body 14 in any position in which the projections 42 engage the notches 112.

In other constructions (not shown), attachment 100 may include fewer or more than three notches 112. Also, each or all of the notches 112 may have a different shape than illustrated. In addition, the notches 112 may have a different spacing (e.g., equidistant based on the number of notches 112, non-equidistant, etc.). In constructions in which the interface between the body 14 and the attachment 100 is non-uniform (e.g., the projections 42 and corresponding notches 112 have a different shape and/positioning), the attachment 100 may be installed in a limited number of rotational positions relative to the body 14. In other constructions (not shown), the projections 42 and notches 112 may be reversed and positioned on the other of the body 14 and the attachment 100.

The body 104 includes an inner rim 120, which engages the radial wall of the channel 22 of the body 14, an outer rim 124, and an annular plate 130 extending therebetween. The body 104 includes additional structure, such as, for example, openings 134 (e.g., shaped and positioned for weight reduction, air flow improvement, etc.), ridges (e.g., for increased strength), etc. The operating portion of the attachment 100, described in more detail below, extends from the body 104.

To support and retain trimming line L, the plate 130 defines line holding structures. In the illustrated construction, each line holding structure retains a folded line L with line segments positioned on each side of a recess 116. The illustrated line holding structures are spaced about the circumference (e.g., about 120° between the center of each line holding structure).

Each line holding structure includes a pair of circumferentially-spaced line insert openings 138 proximate an associated recess 116. A pair of eyelets 142 is spaced circumferentially outside of the openings 138. Each eyelet 142 includes an outlet opening 146 communicating with a radial slot 150. The slot 150 is defines by radial walls 154 extending between the rims 120, 124. Each circumferentially-inner radial wall 154 defines a circumferential indentation 158 in the direction of an associated opening 138. The indentation 158 may guide, pinch, lock, etc., a portion of the line L. In the illustrated construction, openings 134 are positioned on each side of an eyelet 142 to enhance weight reduction around the trimming line L.

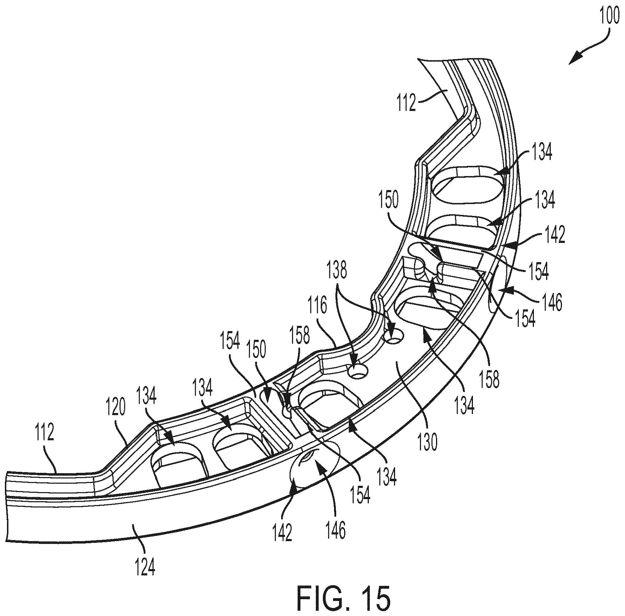

As shown in Fig. 15, to load trimming line L, a length of trimming line L is folded. Ends of the trimming line L are inserted upwardly through respective openings 138. The ends of the line L are then guided circumferentially outwardly into the eyelets 142. Each end is inserted into a slot 150 and through an outlet opening 146. An intermediate portion of the line L is positioned in the indentation 158. When a line L is worn or damaged, the line L is removed in a reverse manner and replaced.

In another loading process, the line L may also be fed through an opening 134 between the opening 138 and the eyelet 142. In such a process, the ends of the line L are inserted downwardly through the openings 138, upwardly through the openings 134 and through the eyelets 142.

To install the string trimmer attachment 100 on the head 10, the actuating mechanism is operated (e.g., the strike plate 30 is depressed to move the carrier 34 downwardly) to adjust the retainers 26 to the release position, opening the channel 22. The attachment 100 is installed on the body 14 into the channel 22 with each drive projection 42 being received in an associated notch 112 and each boss 54 being received in an associated recess 116. To retain the attachment 100, the actuating mechanism is operated (e.g., the strike plate 30 is released, and the spring 38 moves the carrier 34 upwardly) to adjust the retainers 26 to the retaining position, covering the channel (see Fig. 6).

To remove the attachment 100, the process is reversed. The actuating mechanism is operated to move the retainers 26 to the release position, uncovering the channel 22. The attachment 100 may then be removed from the channel 22 and from the head 10. If the trimmer is held in the operating orientation, the attachment 100 will fall off of the head 10.

To install another attachment 100, the user may invert the trimmer so that the head 10 faces upwardly and place the attachment 100 on the head 10. The actuating mechanism is operated to move the retainers 26 to the retaining position, covering the channel 22 and retaining the attachment 100. Due to the simplicity of changing the attachment 100, a user may interchange attachments 100 very quickly (e.g., within seconds), with different attachments 100 being used for different operations (e.g., cutting, trimming, edging, blowing, etc.).

With the string trimmer attachment 100 supported on the head 10, operation of the trimmer causes rotation of the head 10 and the driven attachment 100. The lines L of the rotating string trimmer attachment 100 cut weeds, grass, etc. With other trimmer heads using a bump head, there can be issues of loading, line welding and tangling, and vibration. The head 10 and the string trimmer attachment 100 eliminate the need for the bump head, wound spools, etc.

The embodiment(s) described above and illustrated in the figures are presented by way of example only and are not intended as a limitation upon the concepts and principles of the present invention. As such, it will be appreciated that variations and modifications to the elements and their configuration and/or arrangement exist within the scope of the claims.

## Claims

1. A string trimmer attachment (100) for use with a trimmer, the string trimmer attachment (100) comprising:
an attachment body (104) defining a central opening (108) positionable on a body (14) of a trimmer head (10), the attachment body (104) defining a first driven member (112) in the central opening (108), the first driven member (112) being engageable with a drive member (42) of the trimmer head (10); and
a first line-holding structure supported on the attachment body (104) operable to hold a first trimming line (L) extending radially-outwardly from the attachment body (104), **characterised in that** the first line-holding structure is circumferentially spaced from the first driven member (112).

2. The string trimmer attachment (100) of claim 1, wherein the first trimming line (L) is folded and has a first end, a second end, and an intermediate portion, and wherein the first line-holding structure defines a pair of circumferentially-spaced line insert openings (138) and a pair of eyelets (142) spaced circumferentially outside the line insert openings (138), the line insert openings (138) being operable to receive the intermediate portion, one of the pair of eyelets (142) being operable to receive a portion of the first trimming line (L) with the first end extending radially-outwardly, the other of the pair of eyelets (142) being operable to receive a portion of the first trimming line (L) with the second end extending radially-outwardly.

3. The string trimmer attachment (100) of claim 2, wherein each eyelet (142) includes an outlet opening (146) in communication with a radial slot (150), the radial slot (150) being operable to receive the portion of the first trimming line (L) with the first end extending radially-outwardly; and, optionally, wherein the radial slot (150) is defined by a radial wall (154), a circumferential indentation (158) being defined through the radial wall (154) and configured to guide a portion of the first trimming line (L) between an associated line insert opening (138) and eyelet (142).

4. The string trimmer attachment (100) of claim 2 or 3, wherein the attachment body (104) defines a plurality of openings (134) proximate each eyelet (142).

5. The string trimmer attachment (100) of any one of claims 1 to 4, wherein the attachment body (104) defines a second driven member (112) circumferentially spaced from the first driven member (112) and engageable with a second drive member (42) of the trimmer head (10), the first line-holding structure being circumferentially between the first driven member (112) and the second driven member (112).

6. The string trimmer attachment (100) of any one of claims 1 to 5, further comprising a second line-holding structure supported on the attachment body (104) circumferentially spaced from the first line-holding structure, the second line-holding structure being operable to hold a second trimming line (L) extending radially-outwardly from the attachment body (104), the first driven member (112) being circumferentially between the first line-holding structure and the second line-holding structure.

7. A string trimmer attachment (100) according to claim 1, wherein the first line-holding structure defines a pair of circumferentially-spaced line insert openings (138) and a pair of eyelets (142) spaced circumferentially outside the line insert openings (138), the first trimming line (L) being folded and having a first end, a second end, and an intermediate portion, the line insert openings (138) being operable to receive the intermediate portion, one of the pair of eyelets (142) being operable to receive a portion of the first trimming line (L) with the first end extending radially-outwardly, the other of the pair of eyelets (142) being operable to receive a portion of the first trimming line (L) with the second end extending radially-outwardly.

8. The string trimmer attachment (100) of claim 7, wherein the attachment body defines a second driven member circumferentially spaced from the first driven member and engageable with a second drive member of the trimmer head, the first line-holding structure being circumferentially between the first driven member and the second driven member.

9. The string trimmer attachment (100) of claim 7 or 8 wherein the string trimmer attachment (100) further comprises a second line-holding structure supported on the attachment body (104) circumferentially spaced from the first line-holding structure, the second line-holding structure being operable to hold a second trimming line (L) extending radially-outwardly from the attachment body (104), the first driven member being circumferentially between the first line-holding structure and the second line-holding structure.

10. The string trimmer attachment (100) of claim 7, further comprising a second line-holding structure circumferentially spaced from the first line-holding structure, the second line-holding structure being operable to hold a second trimming line (L).

11. The string trimmer attachment (100) of any one of claims 7 to 10, wherein each eyelet (142) includes an outlet opening (146) in communication with a radial slot (150), wherein the radial slot (150) is operable to receive the portion of the first trimming line (L) with the first end extending radially-outwardly; and, optionally, wherein the radial slot (150) is defined by a radial wall (154), and wherein the first line-holding structure includes a circumferential indentation (158) through the radial wall (154) and configured to guide a portion of the first trimming line (L) between an associated line insert opening (138) and eyelet (142).

12. The string trimmer attachment (100) of any one of claims 7 to 11, wherein the attachment body (104) defines a plurality of openings (134) proximate each eyelet.

13. A method of operating a string trimmer, the trimmer including a drive shaft and a trimmer head (10) rotatably driven by the drive shaft, a string trimmer attachment (100) including an attachment body (104) defining a central opening (108), the attachment body (104) defining a first driven member (112) in the central opening (108), the first driven member (112) being engageable with a drive member (42) of the trimmer head (10), and a line-holding structure supported on the attachment body operable to hold a first trimming line (L) extending radially-outwardly from the attachment body (104), the line-holding structure defining a first line insert opening (138) and a second line insert opening (138) circumferentially spaced from the first line insert opening, (138) a first eyelet (142) and a second eyelet (142) spaced circumferentially outside the first line insert opening (138) and the second line insert opening (138), the first line-holding structure being circumferentially spaced from the first driven member (112), and a trimming line (L) having a first end, a second end, and an intermediate portion, the method comprising:
folding the trimming line (L);
inserting the first end of the trimming line (L) into the first line insert opening (138);
guiding the first end of the trimming line (L) circumferentially outwardly toward the first eyelet (142);
inserting the first end of the trimming line radially outwardly through the first eyelet (142);
inserting the second end of the trimming line (L) into the second line insert opening (138);
guiding the second end of the trimming line (L) circumferentially outwardly toward the second eyelet (142);
inserting the second end of the trimming line (L) radially outwardly through the second eyelet (142);
supporting the attachment body (104) on the trimmer head (10); and
rotatably driving the trimmer head (10) and the attachment body (104).

14. The method of claim 13, wherein guiding the first end includes positioning the intermediate portion of the trimming line (L) in a first indentation (158) circumferentially between the first line insert opening (138) and the first eyelet (142); and, optionally, wherein guiding the second end includes positioning the intermediate portion of the trimming line (L) in a second indentation (158) circumferentially between the second line insert opening (138) and the second eyelet (142).

15. The method of claim 13 or 14, wherein inserting the first end of the trimming line (L) radially outwardly includes guiding the first end of the trimming line through a first slot (150); and, optionally, wherein inserting the second end of the trimming line (L) radially outwardly includes guiding the second end of the trimming line through a second slot (150).

## Patentansprüche

1. Rasentrimmer-Aufsatz (100) zur Verwendung mit einem Trimmer, wobei der Rasentrimmer-Aufsatz (100) umfasst:
einen Anbringungs-Körper (104), der eine mittige Öffnung (108) aufweist, die auf einem Körper (14) eines Trimmer-Kopfes (10) positioniert werden kann, wobei der Anbringungs-Körper (104) ein erstes angetriebenes Element (112) in der mittigen Öffnung (108) aufweist, und das erste angetriebene Element (112) mit einem antreibenden Element (42) des Trimmer-Kopfes (10) in Eingriff gebracht werden kann; sowie
eine erste Faden-Haltestruktur, die an dem Anbringungs-Körper (104) gelagert ist und in Funktion einen ersten Trimmerfaden (L) halten kann, der sich von dem Anbringungs-Körper (104) radial nach außen erstreckt, **dadurch gekennzeichnet, dass** die erste Faden-Haltestruktur in Umfangsrichtung von dem ersten angetriebenen Element (112) beabstandet ist.

2. Rasentrimmer-Aufsatz (100) nach Anspruch 1, wobei der erste Trimmerfaden (L) umgebogen ist und ein erstes Ende, ein zweites Ende sowie einen Zwischenabschnitt aufweist, die erste Faden-Haltestruktur ein Paar in Umfangsrichtung beabstandeter Faden-Einführöffnungen (138) sowie ein Paar Ösen (142) aufweist, die in Umfangsrichtung von den Faden-Einführöffnungen (138) nach außen beabstandet sind, wobei die Faden-Einführöffnungen (138) in Funktion den Zwischenabschnitt aufnehmen können, eine des Paars von Ösen (142) in Funktion einen Abschnitt des ersten Trimmerfadens (L) aufnehmen kann, wobei sich das erste Ende radial nach außen erstreckt, und die andere des Paars von Ösen (142) in Funktion einen Abschnitt des ersten Trimmerfadens (L) aufnehmen kann, wobei sich das zweite Ende radial nach außen erstreckt.

3. Rasentrimmer-Aufsatz (100) nach Anspruch 2, wobei jede Öse (142) eine Auslassöffnung (146) enthält, die mit einem radialen Schlitz (150) in Verbindung steht, der radiale Schlitz (150) in Funktion den Abschnitt des ersten Trimmerfadens (L) aufnehmen kann und sich dabei das erste Ende radial nach außen erstreckt, optional der radiale Schlitz (150) durch eine radiale Wand (154) gebildet wird und eine Umfangsvertiefung (158) durch die radiale Wand (154) hindurch ausgebildet und so ausgeführt ist, dass sie einen Abschnitt des ersten Trimmerfadens (L) zwischen einer zugehörigen Faden-Einführöffnung (138) und einer Öse (142) führt.

4. Rasentrimmer-Aufsatz (100) nach Anspruch 2 oder 3, wobei der Anbringungs-Körper (104) eine Vielzahl von Öffnungen (134) in der Nähe jeder Öse (142) aufweist.

5. Rasentrimmer-Aufsatz (100) nach einem der Ansprüche 1 bis 4, wobei der Anbringungs-Körper (104) ein zweites angetriebenes Element (112) aufweist, das in Umfangsrichtung von dem ersten angetriebenen Element (112) beabstandet und mit einem zweiten antreibenden Element (42) des Trimmer-Kopfes (10) in Eingriff gebracht werden kann, wobei sich die erste Faden-Haltestruktur in Umfangsrichtung zwischen dem ersten angetriebenen Element (112) und dem zweiten angetriebenen Element (112) befindet.

6. Rasentrimmer-Aufsatz (100) nach einem der Ansprüche 1 bis 5, die des Weiteren eine zweite Faden-Haltestruktur umfasst, die an dem Anbringungs-Körper (104) in Umfangsrichtung von der ersten Faden-Haltestruktur beabstandet gelagert ist, wobei die zweite Faden-Haltestruktur in Funktion einen zweiten Trimmerfaden (L) halten kann, der sich von dem Anbringungs-Körper (104) radial nach außen erstreckt, und sich das erste angetriebene Element (112) in Umfangsrichtung zwischen der ersten Faden-Haltestruktur und der zweiten Faden-Haltestruktur befindet.

7. Rasentrimmer-Aufsatz nach Anspruch 1, wobei die erste Faden-Haltestruktur ein Paar in Umfangsrichtung beabstandeter Faden-Einführöffnungen (138) sowie ein Paar von Ösen (142) aufweist, die in Umfangsrichtung von den Faden-Einführöffnungen (138) nach außen beabstandet sind, wobei der erste Trimmerfaden (L) umgebogen ist und ein erstes Ende, ein zweites Ende sowie einen Zwischenabschnitt aufweist, die Faden-Einführöffnungen (138) in Funktion den Zwischenabschnitt aufnehmen können, eine des Paars von Ösen (142) einen Abschnitt des ersten Trimmerfadens (L) aufnehmen kann, wobei sich das erste Ende radial nach außen erstreckt, und die andere des Paars von Ösen (142) in Funktion einen Abschnitt des ersten Trimmerfadens (L) aufnehmen kann, wobei sich das zweite Ende radial nach außen erstreckt.

8. Rasentrimmer-Aufsatz (100) nach Anspruch 7, wobei der Anbringungs-Körper ein zweites angetriebenes Element aufweist, das von dem ersten angetriebenen Element in Umfangsrichtung beabstandet ist und mit einem zweiten Antriebselement des Trimmer-Kopfes in Eingriff gebracht werden kann, und sich die erste Faden-Haltestruktur in Umfangsrichtung zwischen dem ersten angetriebenen Element und dem zweiten angetriebenen Element befindet.

9. Rasentrimmer-Aufsatz (100) nach Anspruch 7 oder 8, wobei der Rasentrimmer-Aufsatz (100) des Weiteren eine zweite Faden-Haltestruktur umfasst, die an dem Anbringungs-Körper (104) in Umfangsrichtung von der ersten Faden-Haltestruktur beabstandet gelagert ist, die zweite Faden-Haltestruktur in Funktion einen zweiten Trimmerfaden (L) halten kann, der sich von dem Anbringungs-Körper (104) radial nach außen erstreckt, und sich das erste angetriebene Element (112) in Umfangsrichtung zwischen der ersten Faden-Haltestruktur und der zweiten Faden-Haltestruktur befindet.

10. Rasentrimmer-Aufsatz (100) nach Anspruch 7, der des Weiteren eine zweite Faden-Haltestruktur umfasst, die in Umfangsrichtung von der ersten Faden-Haltestruktur beabstandet ist, wobei die zweite Faden-Haltestruktur in Funktion einen zweiten Trimmerfaden (L) halten kann.

11. Rasentrimmer-Aufsatz (100) nach einem der Ansprüche 7 bis 10, wobei jede Öse (142) eine Auslassöffnung (146) enthält, die mit einem radialen Schlitz (150) in Verbindung steht, wobei der radiale Schlitz (150) in Funktion den Abschnitt des ersten Trimmerfadens (L) aufnehmen kann und sich dabei das erste Ende radial nach außen erstreckt, optional der radiale Schlitz (150) durch eine radiale Wand (154) gebildet wird und die erste Faden-Haltestruktur eine Umfangsvertiefung (158) durch die radiale Wand (154) hindurch enthält und so ausgeführt ist, dass sie einen Abschnitt des ersten Trimmerfadens (L) zwischen einer zugehörigen Faden-Einführöffnung (138) und einer Öse (142) führt.

12. Rasentrimmer-Aufsatz (100) nach einem der Ansprüche 7 bis 11, wobei der Anbringungs-Körper (104) eine Vielzahl von Öffnungen (134) in der Nähe jeder Öse aufweist.

13. Verfahren zum Betreiben eines Rasentrimmers, wobei der Trimmer eine Antriebswelle und einen Trimmer-Kopf (10) enthält, der durch die Antriebswelle drehbar angetrieben wird, ein Rasentrimmer-Aufsatz (100) einen Anbringungs-Körper (104) enthält, der eine mittige Öffnung (108) aufweist, der Anbringungs-Körper (104) ein erstes angetriebenes Element (112) in der mittigen Öffnung (108) aufweist, das erste angetriebene Element (112) mit einem antreibenden Element (42) des Trimmer-Kopfes (10) in Eingriff gebracht werden kann, sowie eine Faden-Haltestruktur, die an dem Anbringungs-Körper gelagert ist und in Funktion einen ersten Trimmerfaden (L) halten kann, der sich von dem Anbringungs-Körper (104) radial nach außen erstreckt, wobei die Faden-Haltestruktur eine erste Faden-Einführöffnung (138) sowie eine zweite Faden-Einführöffnung (138), die von der ersten Faden-Einführöffnung (138) in Umfangsrichtung beabstandet ist, eine erste Öse (142) und eine zweite Öse (142) aufweist, die in Umfangsrichtung von der ersten Faden-Einführöffnung (138) und der zweiten Faden-Einführöffnung (138) nach außen beabstandet sind, wobei die erste Faden-Haltestruktur in Umfangsrichtung von dem ersten angetriebenen Element (112) beabstandet ist, sowie einen Trimmerfaden (L) mit einem ersten Ende, einem zweiten Ende und einem Zwischenabschnitt, wobei das Verfahren umfasst:
Umbiegen des Trimmerfadens (L);
Einführen des ersten Endes des Trimmerfadens (L) in die erste Faden-Einführöffnung (138);
Führen des ersten Endes des Trimmerfadens (L) in Umfangsrichtung nach außen auf die erste Öse (142) zu;
Einführen des ersten Endes des Trimmerfadens radial nach außen durch die erste Öse (142) hindurch;
Einführen des zweiten Endes des Trimmerfadens (L) in die zweite Faden-Einführöffnung (138);
Führen des zweiten Endes des Trimmerfadens (L) in Umfangsrichtung auf die zweite Öse (142) zu;
Einführen des zweiten Endes des Trimmerfadens (L) radial nach außen durch die zweite Öse (142) hindurch;
Lagern des Anbringungs-Körpers (104) an dem Trimmer-Kopf (10); und
drehendes Antreiben des Trimmer-Kopfes (10) und des Anbringungs-Körpers (104).

14. Verfahren nach Anspruch 13, wobei Führen des ersten Endes Positionieren des Zwischenabschnitts des Trimmerfadens (L) in einer ersten Vertiefung (158) in Umfangsrichtung zwischen der ersten Faden-Einführöffnung (138) und der ersten Öse (142) einschließt und optional Führen des zweiten Endes Positionieren des Zwischenabschnitts des Trimmerfadens (L) in einer zweiten Vertiefung (158) in Umfangsrichtung zwischen der zweiten Faden-Einführöffnung (138) und der zweiten Öse (142) einschließt.

15. Verfahren nach Anspruch 13 oder 14, wobei Einführen des ersten Endes des Trimmerfadens (L) radial nach außen Führen des ersten Endes des Trimmerfadens durch einen ersten Schlitz (150) hindurch einschließt und optional Einführen des zweiten Endes des Trimmerfadens (L) radial nach außen Führen des zweiten Endes des Trimmerfadens durch einen zweiten Schlitz (150) hindurch einschließt.

## Revendications

1. Fixation de débroussailleuse à fil (100) pour l'utilisation avec une débroussailleuse, la fixation de débroussailleuse à fil (100) comprenant :
un corps de fixation (104) définissant une ouverture centrale (108) pouvant être positionnée sur un corps (14) d'une tête de débroussailleuse (10), le corps de fixation (104) définissant un premier élément d'entraînement (112) dans l'ouverture centrale (108), le premier élément d'entraînement (112) pouvant être engagé avec un élément d'entraînement (42) de la tête de débroussailleuse (10) ; et
une première structure de maintien de ligne supportée sur le corps de fixation (104) pouvant fonctionner pour tenir une première ligne de débroussailleuse (L) s'étendant radialement vers l'extérieur depuis le corps de fixation (104),
**caractérisée en ce que** la première structure de maintien de ligne est espacée dans la circonférence du premier élément d'entraînement (112).

2. Fixation de débroussailleuse à fil (100) selon la revendication 1, la première ligne de débroussailleuse (L) étant pliée et présentant une première extrémité, une seconde extrémité, et une portion intermédiaire, et la première structure de maintien de ligne définissant une paire d'ouvertures d'insert de ligne (138) espacées dans la circonférence et une paire d'œillets (142) espacés dans la circonférence à l'extérieur des ouvertures d'insert de ligne (138), les ouvertures d'insert de ligne (138) pouvant fonctionner pour recevoir la portion intermédiaire, l'une de la paire d'œillets (142) pouvant fonctionner pour recevoir une portion de la première ligne de débroussailleuse (L) avec la première extrémité s'étendant radialement vers l'extérieur, l'autre de la paire d'œillets (142) pouvant fonctionner pour recevoir une portion de la première ligne de débroussailleuse (L) avec la seconde extrémité s'étendant radialement vers l'extérieur.

3. Fixation de débroussailleuse à fil (100) selon la revendication 2, chaque œillet (142) comprenant une ouverture de sortie (146) en communication avec une fente radiale (150), la fente radiale (150) pouvant fonctionner pour recevoir la portion de la première ligne de débroussailleuse (L) avec la première extrémité s'étendant radialement vers l'extérieur ; et, éventuellement, la fente radiale (150) étant définie par une paroi radiale (154), une indentation dans la circonférence (158) étant définie à travers la paroi radiale (154) et configurée pour guider une portion de la première ligne de débroussailleuse (L) entre une ouverture d'insert de ligne (138) et un œillet (142).

4. Fixation de débroussailleuse à fil (100) selon la revendication 2 ou 3, le corps de fixation (104) définissant une pluralité d'ouvertures (134) près de chaque œillet (142).

5. Fixation de débroussailleuse à fil (100) selon l'une quelconque des revendications 1 à 4, le corps de fixation (104) définissant un second élément d'entraînement (112) espacé dans la circonférence du premier élément d'entraînement (112) et pouvant être engagé avec un second élément d'entraînement (42) de la tête de débroussailleuse (10), la première structure de maintien de ligne se trouvant dans la circonférence entre le premier élément d'entraînement (112) et le second élément d'entraînement (112).

6. Fixation de débroussailleuse à fil (100) selon l'une quelconque des revendications 1 à 5, comprenant en outre une seconde structure de maintien de ligne supportée sur le corps de fixation (104) espacée dans la circonférence de la première structure de maintien de ligne, la seconde structure de maintien de ligne pouvant fonctionner pour maintenir une seconde ligne de débroussailleuse (L) s'étendant radialement vers l'extérieur depuis le corps de fixation (104), le premier élément d'entraînement (112) se trouvant dans la circonférence entre la première structure de maintien de ligne et la seconde structure de maintien de ligne.

7. Fixation de débroussailleuse à fil (100) selon la revendication 1, la première structure de maintien de ligne définissant une paire d'ouvertures d'insert de ligne (138) espacées dans la circonférence et une paire d'œillets (142) espacés dans la circonférence à l'extérieur des ouvertures d'insert de ligne (138), la première ligne de débroussailleuse (L) étant pliée et présentant une première extrémité, une seconde extrémité, et une portion intermédiaire, les ouvertures d'insert de ligne (138) pouvant fonctionner pour recevoir la portion intermédiaire, l'une de la paire d'œillets (142) pouvant fonctionner pour recevoir une portion de la première ligne de débroussailleuse (L) avec la première extrémité s'étendant radialement vers l'extérieur, l'autre de la paire d'œillets (142) pouvant fonctionner pour recevoir une portion de la première ligne de débroussailleuse (L) avec la seconde extrémité s'étendant radialement vers l'extérieur.

8. Fixation de débroussailleuse à fil (100) selon la revendication 7, le corps de fixation définissant un second élément d'entraînement espacé dans la circonférence du premier élément d'entraînement et pouvant être engagé avec un second élément d'entraînement de la tête de débroussailleuse, la première structure de maintien de ligne se trouvant dans la circonférence entre le premier élément d'entraînement et le second élément d'entraînement.

9. Fixation de débroussailleuse à fil (100) selon la revendication 7 ou 8, la fixation de débroussailleuse à fil (100) comprenant en outre une seconde structure de maintien de ligne supportée sur le corps de fixation (104) espacée dans la circonférence de la première structure de maintien de ligne, la seconde structure de maintien de ligne pouvant fonctionner pour maintenir une seconde ligne de débroussailleuse (L) s'étendant radialement vers l'extérieur depuis le corps de fixation (104), le premier élément d'entraînement se trouvant dans la circonférence entre la première structure de maintien de ligne et la seconde structure de maintien de ligne.

10. Fixation de débroussailleuse à fil (100) selon la revendication 7, comprenant en outre une seconde structure de maintien de ligne espacée dans la circonférence de la première structure de maintien de ligne, la seconde structure de maintien de ligne pouvant fonctionner pour maintenir une seconde ligne de débroussailleuse (L).

11. Fixation de débroussailleuse à fil (100) selon l'une quelconque des revendications 7 à 10, chaque œillet (142) comprenant une ouverture de sortie (146) en communication avec une fente radiale (150), la fente radiale (150) pouvant fonctionner pour recevoir la portion de la première ligne de débroussailleuse (L) avec la première extrémité s'étendant radialement vers l'extérieur ; et, éventuellement, la fente radiale (150) étant définie par une paroi radiale (154), et la première structure de maintien de ligne comprenant une indentation dans la circonférence (158) à travers la paroi radiale (154) et configurée pour guider une portion de la première ligne de débroussailleuse (L) entre une ouverture d'insert de ligne (138) associée et l'œillet (142).

12. Fixation de débroussailleuse à fil (100) selon l'une quelconque des revendications 7 à 11, le corps de fixation (104) définissant une pluralité d'ouvertures (134) près de chaque œillet.

13. Procédé de fonctionnement d'une débroussailleuse à fil, la débroussailleuse comprenant un arbre d'entraînement et une tête de débroussailleuse (10) entraînée de manière à pouvoir tourner par l'arbre d'entraînement, une fixation de débroussailleuse à fil (100) comprenant un corps de fixation (104) définissant une ouverture centrale (108), le corps de fixation (104) définissant un premier élément d'entraînement (112) dans l'ouverture centrale (108), le premier élément d'entraînement (112) pouvant être engagé avec un élément d'entraînement (42) de la tête de débroussailleuse (10), et une structure de maintien de ligne supportée sur le corps de fixation pouvant fonctionner pour maintenir une première ligne de débroussailleuse (L) s'étendant radialement vers l'extérieur depuis le corps de fixation (104), la structure de maintien de ligne définissant une première ouverture d'insert de ligne (138) et une seconde ouverture d'insert de ligne (138) espacée dans la circonférence de la première ouverture d'insert de ligne (138), un premier œillet (142) et un second œillet (142) espacés dans la circonférence à l'extérieur de la première ouverture d'insert de ligne (138) et de la seconde ouverture d'insert de ligne (138), la première structure de maintien de ligne étant espacée dans la circonférence du premier élément d'entraînement (112), et une ligne de débroussailleuse (L) présentant une première extrémité, une seconde extrémité, et une portion intermédiaire, le procédé comprenant :
le pliage de la ligne de débroussailleuse (L) ;
l'insertion de la première extrémité de la ligne de débroussailleuse (L) dans la première ouverture d'insert de ligne (138) ;
le guidage de la première extrémité de la ligne de débroussailleuse (L) dans la circonférence vers l'extérieur vers le premier œillet (142) ;
l'insertion de la première extrémité de la ligne de débroussailleuse radialement vers l'extérieur à travers le premier œillet (142) ;
l'insertion de la seconde extrémité de la ligne de débroussailleuse (L) dans la seconde ouverture d'insert de ligne (138) ;
le guidage de la seconde extrémité de la ligne de débroussailleuse (L) dans la circonférence vers l'extérieur vers le second œillet (142) ;
l'insertion de la seconde extrémité de la ligne de débroussailleuse (L) radialement vers l'extérieur à travers le second œillet (142) ;
le support du corps de fixation (104) sur la tête de débroussailleuse (10) ; et
l'entraînement par rotation de la tête de débroussailleuse (10) et du corps de fixation (104).

14. Procédé selon la revendication 13, le guidage de la première extrémité comprenant le positionnement de la portion intermédiaire de la ligne de débroussailleuse (L) dans une première indentation (158) dans la circonférence entre la première ouverture d'insert de ligne (138) et le premier œillet (142) ; et, éventuellement, le guidage de la seconde extrémité comprenant le positionnement de la portion intermédiaire de la ligne de débroussailleuse (L) dans une seconde indentation (158) dans la circonférence entre la seconde ouverture d'insert de ligne (138) et le second œillet (142).

15. Procédé selon la revendication 13 ou 14, lors de l'insertion de la première extrémité de la ligne de débroussailleuse (L) radialement vers l'extérieur comprenant le guidage de la première extrémité de la ligne de débroussailleuse à travers une première fente (150) ; et, éventuellement, lors de l'insertion de la seconde extrémité de la ligne de débroussailleuse (L) radialement vers l'extérieur comprenant le guidage de la seconde extrémité de la ligne de débroussailleuse à travers une seconde fente (150).
